# EUROPEAN PATENT APPLICATION

(11) **EP 2 381 406 A1**
(43) Date of publication of application: **26.10.2011**
(21) Application number: 11460006.7
(22) Date of filing: 15.02.2011
(51) Int. Cl.: G06Q 10/00, G07F 11/00, G06Q 30/00, G06F 17/30

(54) **Apparatus and method for comparing, sorting and presenting objects.**

(30) Priority: 15.02.2010 PL 39044610
(71) Applicant: Maliszewski, Pawel, 30608 Kraków (PL); Chalecki, Dariusz, 03684 Warszawa (PL)
(72) Inventor: Maliszewski, Pawel, 30608 Kraków (PL); Chalecki, Dariusz, 03684 Warszawa (PL)
(74) Representative: Czub, Krzysztof

(57) **Abstract**

An apparatus for comparing, sorting and presenting an objects comprising a storage module (1), a data processing module (2), a manipulator module (3), a conveyance and presentation means (4), a collection module (5), wherein the storage module (1) is connected to the manipulator module (3) which is connected to the conveyance and presentation means (4), and wherein the data processing module (2) is connected to the storage module (1), the manipulator module (3) the conveyance and presentation means (4) and the collection module (5). The objects (6) are arrangeable on the conveyance and presentation means (4) in a compartments (7) arrangeable multidimensionally in an order according user input (502) into the comparing program (243) communicable with the program data (244).

## Description

This application claims priority to the Polish Patent Application No. P-390446, filed February 15, 2010, the contents of which are incorporated herein by reference.

The present invention relates to an apparatus and method for comparing, sorting and presenting objects, particularly products, service offers and other physical or data objects having plurality of characteristics.

Known methods for comparing, sorting and presenting products or service offers are based on:
- single-dimensional comparing and presenting in the form of an ordinary list, usually used with regard to objects with verbal description, on which elements are compared and presented by the value of selected single characteristic or variable. The advantage of this method is its intuitiveness and ease of evaluation of results. The most serious shortcoming of described method is difficulty in comparing attractiveness of the sorted elements in terms of more than one of their characteristics;
- single-dimensional comparing and presenting in the form of a "wrapped" list, usually used with regard to objects for which a dominant carrier of information is the visual characteristic of the object, on which elements are compared and presented by the value of selected single characteristic or variable, and the elements are compared and presented linearly in consecutive rows, which are automatically "wrapped" when the number of elements in the row is greater than the length of a single row. The advantage of this method of comparing and presenting is relative simplicity of rules and more economical use of space available for the presentation of the results of sorting. The most serious shortcoming in this case is the difficulty in comparing the attractiveness of compared and presented elements, in particular in terms of more than one characteristic at a time;
- two-dimensional comparing and presenting in tabular form, used mostly in with regard to objects, for which assessment essential is simultaneous comparison of two parameters, in which elements are compared and presented in the form of rows and columns of the table by the values of possessed by them characteristics or variables defining the row and column dimensions of the table. The advantage of this method is possibility of relatively easy assessment of compared and presented elements in terms of two variables simultaneously. A drawback of the described method is the dependence of the results of the values of characteristics possessed by compared and presented elements. In practice, it is a common situation, that many fields in the table with results of compared and presented elements are empty, because among compared and presented elements there are no elements which possess specific combination of characteristics. Also the opposite situation may happen, that is that the fields of the table contain more than one element, when more than one element at the same time meet criteria defining specific position in the table. In every of the two above mentioned cases there is a significant loss of ergonomics of comparing and presenting elements, which affects the difficulty of assessment of the results.

The construction of known devices for comparing, sorting and presenting objects involves a limited number of items which are simultaneously offered for purchase in one device. It is usually only a few or several products or service offers of one kind, which is due to applying a common solutions, according to which all offered products or services offers are all the time visible to the user.

Described solutions are characterized by inability of broader familiarization with the used characteristics of products or service offers, which is due to the lack of ability of physical "contact" with the product or service offer prior to purchase and the lack of connection between the characteristics of products or service offers and they way of their presentation in the device. Solutions used in vending devices in respect to sorting of the products are limited to a narrow set of characteristics, while the products are usually sorted by only one selected characteristic, and such an order is permanently set in the device without possibility of its dynamic alteration.

It is an object of the present invention to provide a user with a apparatus and method for comparing, sorting and presenting objects, particularly products, or service offers, which can be presented multidimensionally, particularly according set of the object characteristics chosen by the user, which allows the user to easy find and decide which of the products or service offers he would most likely choose and buy.

This and other objects and advantages of the present invention will become apparent from the detailed description, which follows.

The idea of the invention is an apparatus for comparing, sorting and presenting an objects comprising a storage module for storing plurality of the objects, a data processing module, a manipulator module, a conveyance and presentation means and a collection module, wherein the storage module is connected to the manipulator module, said manipulator module is connected to the conveyance and presentation means, said data processing module comprising a computing device, a pointing device, a keyboard device, and a monitor, said computing device comprising a processing unit, a system memory, an output peripheral interface, a non-removable non-volatile memory interface, a removable non-volatile memory interface, a user input interface, a network interface, a video interface and a system bus substantially coupling said processing unit, system memory, output peripheral interface, non-removable non-volatile memory interface, removable non-volatile memory interface, user input interface, network interface, and video interface, said non-removable non-volatile memory interface comprising an operating system, a comparing program and a program data, said program data comprising a plurality of characteristics (not shown) of said objects, wherein further the objects are arrangeable on the conveyance and presentation means in a compartments, said compartments arrangeable in an order according the user input into the comparing program communicable with the program data. The data memory systems can be in a form of a cloud computing. The data processing module can be a part of personal computer, cloud computing, computers connected thru network or the Internet.

Preferably, the compartments are movable and can be moved against each other or in the groups at the same time. The compartments may be physical or virtual, can be attached in a visible way or not visible to the user.
The compartments can be realized in a form of a computer program objects physically moving in a loop and operable to show plurality of products initially visible or not visible to the user. In computer environment a non-marked compartment of space giving impression of objects floating in the space visible as a background on the computer screen.

The storage module can comprise plurality of a storage compartments (not shown) for storing the objects. The storage modules may be physical, virtual, single location, multi-location or just in time delivery storage modules. The objects may be of a physical form or a visual form as a representation of any physical objects (for example photos, graphics, etc), or a form of a text descriptions of products, virtual products (for example avatars), data objects, information (for instance data search results like for example on the internet site www.google.com), information about services, any combination of the above (e.g. combination of photo and text descriptions), or any other object as can be understood taking into consideration different sciences and techniques.

The manipulator module can comprise plurality of a manipulating means (not shown). Favorably, the manipulator module and the manipulating means are capable to place and arrange the objects on the conveyance and presentation means fast enough to allow the conveyance and presentation means which can be looped to create the impression of continuous and indefinite presentation of the objects initially not visible to the user. Preferably, the manipulator means and the manipulator parts are operative to remove the objects from the conveyance and presentation means and move them back to storage module.

The conveyance and presentation means can comprise plurality of a conveyance and presentation parts.

It is favorable, that the data processing module is accessible by the network interface from a remote computer. The user input may be transferred manually, automatically, or transferred from other programs or communication means. The user input may concern all or some values of the respective characteristics.

It is advantageous, that the compartments are arrangeable in a form of ostensible matrix comprising at least a first columns and a first rows, said first columns and first rows further comprising respectively a second columns and a second rows. The ostensible matrix can be formed by plurality of groups of sorted objects, plurality of groups of sorted objects aligned vertically in ostensible columns or plurality of groups of sorted objects aligned horizontally in ostensible rows. The objects in the ostensible matrix may be a multidimensional data objects and the ostensible matrix can be multidimensional representation of the multidimensional data objects and multidimensional data space. And if two or more objects in any of the respective groups (said respective groups can be further presented visually as respective rows or respective columns of the matrix) have the same value of the characteristic defined for sorting the objects, such objects are being iteratively sorted into subsequent dimensions of the data of the ostensible matrix (which can be further presented visually as respective subsequent row dimensions or respective subsequent column dimensions of the ostensible matrix) according to values of the characteristics defined as said subsequent dimensions of the ostensible matrix, or are being iteratively sorted in the same dimension of the data of the ostensible matrix (which can be further presented as the same row or the same column of the ostensible matrix) according to other characteristics of these objects, and more particularly characteristics selected based on decreasing or increasing value of correlation coefficient or other measures of statistical similarity to the characteristic defined for sorting the objects in the groups, or by characteristic being the randomly generated value (for example value of a random variable generated by comparing program).

The objects can have the same at least first characteristic and can be distinguishable by at least a second characteristic.

The objects can have the same at least first characteristic and the same at least second characteristic, and said objects can be distinguishable by at least third characteristic.

The objects can have the same at least first characteristic, the same at least second characteristic, the same at least third characteristic, and said objects can be distinguishable by at least a fourth characteristic.

The compartments can be in a form of loop movable horizontally.

The compartments can be in a form of loop movable vertically.

Preferably, the objects placed in the compartments are initially visible to the user.

Some of the objects placed in the compartments can be initially not visible to the user.

The characteristics of the objects can consist of any kind of data or variable. In particular these can be individual data, sets of data or statistics concerning many objects at the same time, data concerning individual characteristics of the objects or created based on more than one characteristics of the offer, static data variables or dynamic data variables which are being created during application of the method being the subject of this invention, numerical and nominal data, that is descriptive data, data selected automatically in order to perform ordering or data selected directly by the user.

The idea of the invention is also a method for comparing, sorting and presenting an objects, where the method comprises the steps of entering a user input with at least one data search parameter to a data processing module, processing a command by the data processing module to search and compare the objects, accessing by the data processing module a program data comprising plurality of characteristics of the objects, receiving from the data processing module a content search results data comprising plurality of the characteristics of the objects matching at least one of the search parameters, grouping the objects according to the respective values of at least one of the characteristics of the objects, sorting the objects according to the values of at least one of the characteristic of the objects, presenting multi-dimensionaly to the user the objects in a compartments.

Preferably, the method comprises plurality of iterations and plurality of said steps.

It is favorable, that the compartments with the objects being the result of at least two data search results are simultaneously presented to the user.

It is advantageous that the compartments are movable.

Preferably, the compartments are arranged in a form of an ostensible matrix comprising at least a first columns and a first rows, wherein the objects respectively match at least one of the characteristics according the user input.

The first rows can be sorted according to the values of at least the second characteristic of the objects.

The first columns can be sorted according to the values of at least the second characteristic of the objects.

Preferably, in the step of sorting the objects according to the values of the second characteristic of the objects, said objects are iteratively sorted and grouped according to the same values of the second characteristic and according to the values of the subsequent characteristics of the objects until no objects are grouped after last sorting.

It is favorable, that in the step of sorting the objects according to the values of the second characteristic of the objects, said objects are iteratively sorted and grouped according to the same values of the second characteristic and according to the values of the subsequent characteristics of the objects until no objects are grouped after last sorting, wherein further in the step of presenting the objects to the user in the compartments, said objects having the same at least first characteristic and the same at least second characteristic, said objects are distinguishable by at least third characteristic.

Preferably, the objects presented to the user in the compartments are being changed in response an interactive part of the presented objects being selected.

In addition, the idea of the invention is a computer program product stored on a computer usable medium comprising computer readable program code which, when executed, causes a computer to perform all of the steps of the method described above.

The invention will now be described by way of example and with reference to the accompanying drawings in which:
Fig. 1 shows a perspective view of an apparatus for comparing, sorting and presenting objects;
Fig. 2 presents a block diagram of a data processing module;
Fig. 3 is a representation of a simplified structure of an ostensible matrix;
Fig. 4 presents a simplified flow diagram of the procedure of comparing, sorting and presenting objects.
Fig. 5 presents a detailed flow diagram of the procedure of comparing, sorting and presenting objects.

The embodiments presented in the drawings are intended only for illustrative purpose and do not limit the scope of the present invention, as defined by the accompanying claims.

Using the solution being the subject of this invention allows the user, by comparing, sorting and presenting the objects in terms of more than one characteristic simultaneously - for easy, yet extensive evaluation of the characteristics of individual object before making eventual decision regarding the purchase of particular good or service. Additionally, user gains the ability to more intuitively visually compare analyzed commercial offers in terms of characteristics possessed by these offers. This is because claimed invention allows to recognize relationships between the values of characteristics of commercial offers based on visual analysis of their location in the space of the matrix, being the graphical representation of the ordering of the commercial offers selected by the user in order to enable him to select the offer characterized by the most desirable relation of these characteristics.

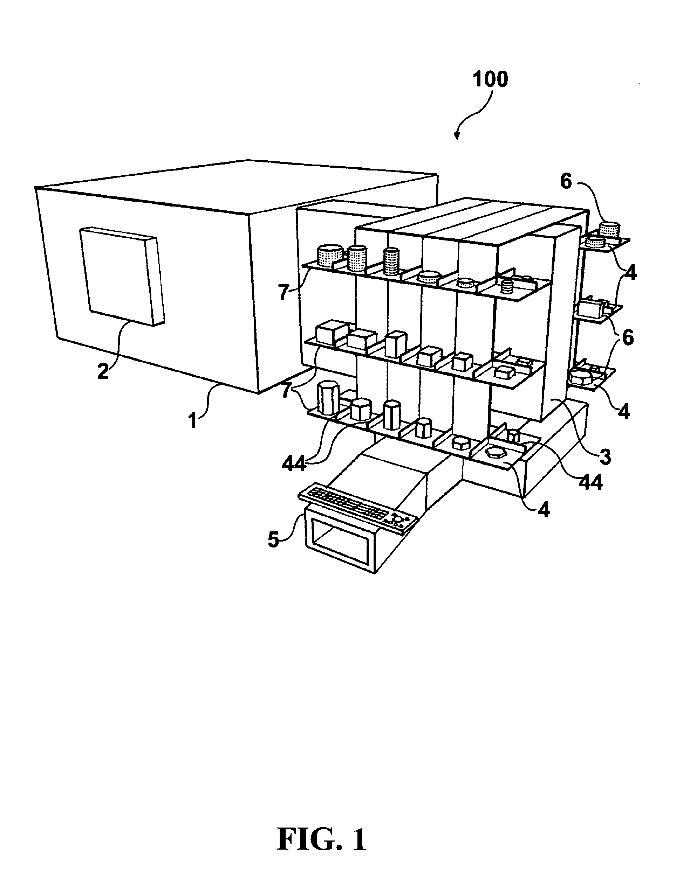

Fig. 1 presents an example of a suitable apparatus for comparing, sorting and presenting an objects on which the invention may be implemented. It is only one example of the apparatus and is not intended to suggest any limitation as to the scope of use or functionality of the invention. The apparatus can be of any size and structure, suitable for different size and kind of the objects 6. The apparatus comprises a storage module 1 for storing plurality of the objects 6, a data processing module 2, a manipulator module 3, a conveyance and presentation means 4, a collection module 5, where the storage module 1 is connected to the manipulator module 3, which is connected to the conveyance and presentation means 4, and where the data processing module 2 is connected to the storage module 1, the manipulator module 2 and the conveyance and presentation means 4.

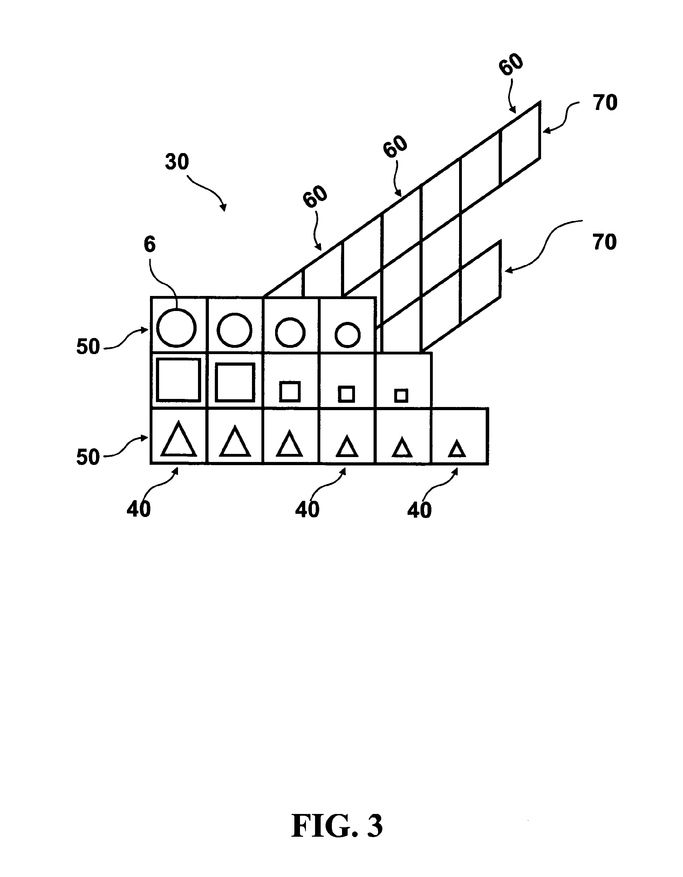

The objects 6 can be arranged on the conveyance and presentation means 4 in a form of matrix 30 shown on Fig. 3, comprising a first columns 40 and a first rows 50, where the first columns 40 and first rows 50 further can comprise respectively a second columns 60 and a second rows 70, each of said first columns 40, first rows 50, second columns 60 and second rows 70 can include the objects 6 which can respectively match at least one of the predefined characteristics.

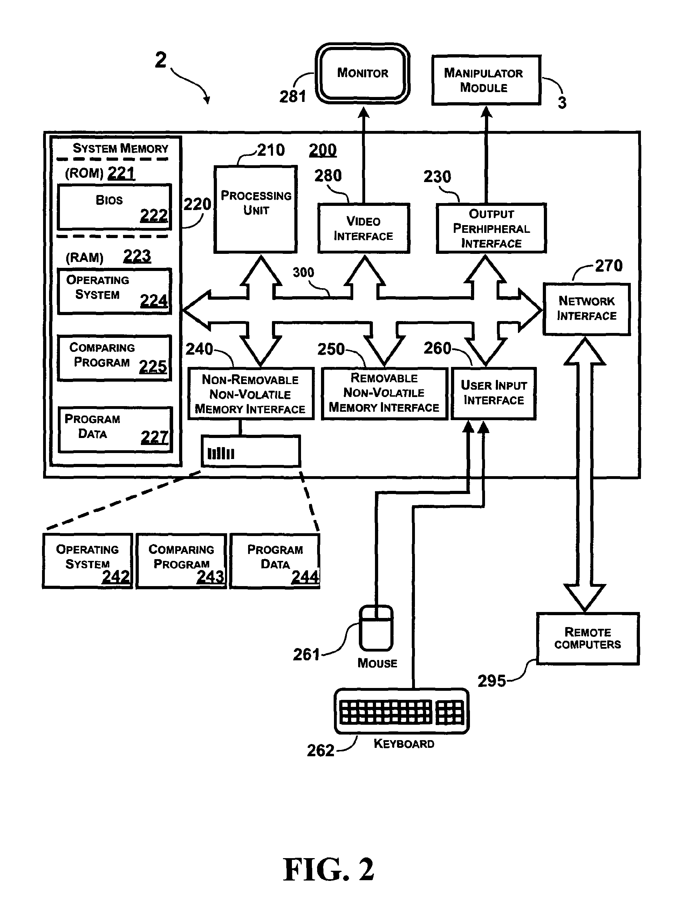

With reference to Fig. 2 an exemplary data processing module 5 is shown, which contains only the essential elements required for representing the idea of the invention. The data processing module 5 can comprise a computing device 200, a pointing device 261, a keyboard device 262, and a monitor 281, said computing device 200 comprising a processing unit 210, a system memory 220, an output peripheral interface 230, a non-removable non-volatile memory interface 240, a removable non-volatile memory interface 250, a user input interface 260, a network interface 270, a video interface 280 and a system bus 300 substantially coupling said processing unit 210, system memory 220, output peripheral interface 230, non-removable non-volatile memory interface 240, removable non-volatile memory interface 250, user input interface 260, network interface 270, and video interface 280, said non-removable non-volatile memory interface 240 comprising an operating system 242, a comparing program 243 and a program data 244, said program data 244 comprising a plurality of characteristics (not shown) of said objects 6. According the user input 502 into the comparing program 243 communicable with the program data 244, the the objects 6 can be arranged on the conveyance and presentation means 4 in a compartments 7.

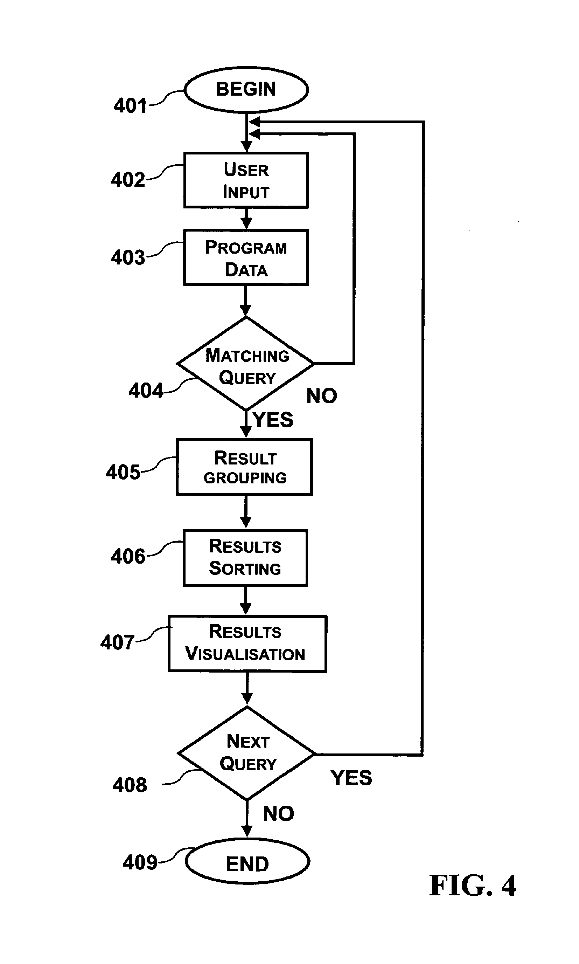

Fig. 4 presents a procedure of comparing, sorting and presenting objects. It starts in step 401 from switching on the apparatus and starting the comparing program. Next, in step 402 the user can send a query to a data processing module, where the query can comprise at least one data search parameter. The input of the user can include plurality of the queries, corresponding to the characteristics of the objects. Next, in step 403 the data processing module is accessing the program data comprising plurality of characteristics of the objects. Next, in step 404 the data processing module is processing a command to search and compare the objects with the plurality of characteristics of the objects. If the result is not matching the user query, the procedure returns to step 402. The steps 402 and 403 can be repeated according to the user inputs. If the result is matching the user query, the procedure goes to step 405. Next, in step 405 the objects can be grouped according the results received from the data processing module according to the respective values of at least one of the characteristics of the objects. Next, in the step 406 the objects can be sorted according to the values of at least one of the characteristic of the objects. Next, in step 407 the results can be presented multidimensionally to the user. Next, in step 408 the user can decide whether to return to the step 402 and continue searching with different search parameters or to end the procedure.

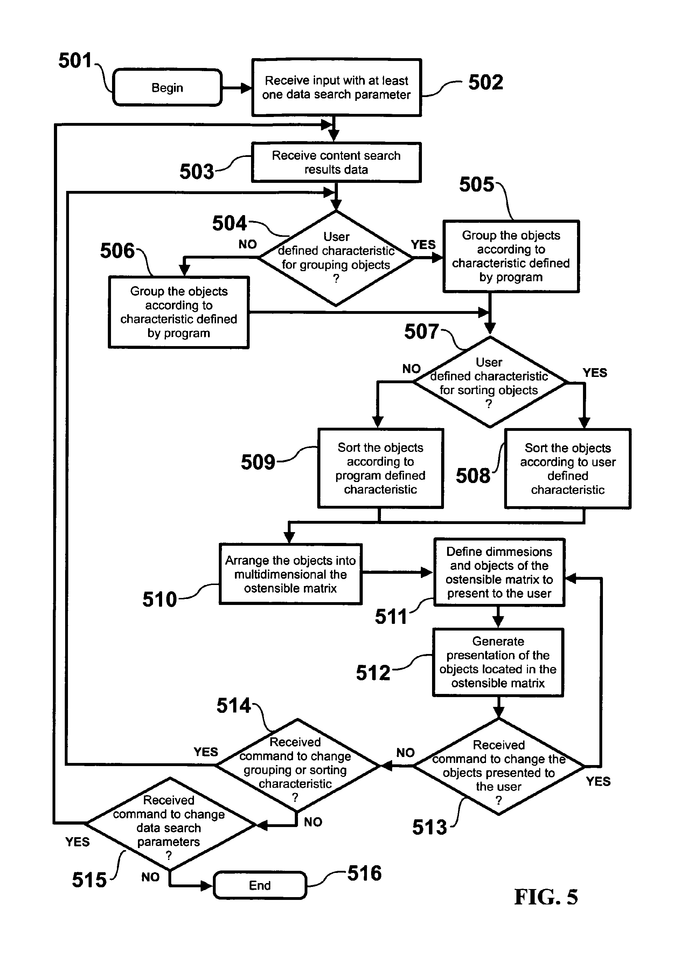

Fig. 5 shows a general overview of the example comparing, sorting and presenting the objects logic, and represents various steps of the methods of this invention; searching, grouping, sorting, changing presentation of the objects. The said objects having plurality of characteristics described by respective multidimensional data.

In Fig. 5, the process begins in step 501 such as may coincide with direct or remote activation of the apparatus, and in particular switching on the apparatus, or starting the comparing program. Next, in step 502 the input with a query to a data processing module is received, where the query can comprise at least one data search parameter, can be sent by a user and more particularly, can include defined by the user characteristics of the objects to be used for grouping and sorting of the objects in the form of the ostensible matrix. It is possible also that the input originates from within the comparing program itself or is derived from other data available to the comparing program in case apparatus is activated and no user input has been received. The user can be a human, software agent, software robot, artificial neural network or any other kind of program intended to give commands or act like a human user or on behalf of the human user. The input can include plurality of the queries comprising among the others the characteristics of the objects selected for grouping, sorting and presenting. As described hereinabove, the input may concern all or some values of the respective characteristics. Next, step 503 is executed in which the content search results data is received from the data processing module. Said data can comprise plurality of multidimensional data describing plurality of characteristics of the objects. Next, step 504 is executed, which represents testing if the user has defined at least one characteristic for grouping the objects. If user has defined said at least one characteristic, step 504 branches to step 505 to group the objects according to the characteristics defined by the user. Returning to step 504, if user has not defined at least one characteristic for grouping the objects, process branches to step 506 to group the objects according to characteristics defined by the comparing program communicable with other program data and other data sources. After steps 505 and 506, executed is step 507 which represents testing if the user has defined at least one characteristic for sorting the objects. If user has defined said at least one characteristic, step 507 branches to step 508 to sort the objects according to the at least one characteristic defined by the user.

Said sorting, can be performed for example in the way described hereinabove, that is, if two or more objects in any of the respective groups formed in step 505 or 506 (said respective groups can be further presented visually as respective rows or respective columns of the matrix) have the same value of the characteristic defined for sorting the objects, such objects are being iteratively sorted into subsequent dimensions of the data of the ostensible matrix (which can be further presented visually as respective subsequent row dimensions or respective subsequent column dimensions of the ostensible matrix) according to values of the characteristics defined as said subsequent dimensions of the ostensible matrix, or are being iteratively sorted in the same dimension of the data of the ostensible matrix (which can be further presented as the same row or the same column of the ostensible matrix) according to other characteristics of these objects, and more particularly characteristics selected based on decreasing or increasing value of correlation coefficient or other measures of statistical similarity to the characteristic defined for sorting the objects in the groups, or by characteristic being the randomly generated value (for example value of a random variable generated by comparing program). Returning to step 507, if user has not defined at least one characteristic for grouping the objects, process branches to step 509 to sort the objects according to characteristics defined by the comparing program communicable with other program data and other data sources. Said sorting, can be performed for example in the way described hereinabove. After steps 508 and 509, step 510 is performed to arrange the objects into multidimensional the ostensible matrix 30. As described hereinabove, said the ostensible matrix 30 can be formed by plurality of groups of sorted objects, plurality of groups of sorted objects aligned vertically in ostensible columns or plurality of groups of sorted objects aligned horizontally in ostensible rows. Next, in step 511 defined is respective part of the ostensible matrix to be presented. More particularly, defined are the respective dimensions of the data of the ostensible matrix and the respective objects arranged in respective rows and columns of the ostensible matrix 30 that are to be presented. Next, in step 512 the program generates presentation of the respective part of the ostensible matrix with respective objects arranged in it. In particular, the generated presentation can be visual presentation in an apparatus operable according to the method or on a display, for example computer screen, showing the herein described presentation. Next, step 513 is executed, which represents testing if a command to change the objects presented to the user was received. If so, the steps 511 and 512 are executed again, that is the process goes back to step 511. If not, step 513 branches to step 514 which represents testing if a command to change the characteristics for grouping or to change the characteristics for sorting has been received. If so, the process branches back to step 504, and if not the process branches to step 515 which represents testing if a command to change the data search parameters has been received. If so, the process branches back to step 503, and if not the process branches to step 516 which ends the process. Reaching the step, 516 does not imply automatically deactivation of the apparatus or switching it off. However, those actions can be part of step 516 provided no further actions by the user are performed and no further commands are received.

As can be seen from the foregoing detailed description, there is provided a methods, system and apparatus that allows users to compare, sort and present the objects described by multidimensional data comprising plurality of the characteristics of the objects. The methods, system and apparatus may be configured in various ways.

While the invention is susceptible to different modifications and alternative constructions, certain illustrated embodiments thereof are shown in the enclosed drawings and have been described above in detail. It should be understood, however, that there is no intention to limit the invention to the specific forms disclosed, but on the contrary, the intention is to cover all modifications, alternative constructions, and equivalents falling within the spirit and scope of the invention.

The preferred embodiments having been thus described provide methods, system and apparatus that allows to compare, sort and present the objects described by multidimensional data comprising plurality of the characteristics of the objects. They will now be evident to those skilled in the art that further variation thereto may be contemplated and that the described methods, system and apparatus may be configured in various ways. Such variations are not regarded as a departure from the invention, the true scope of the invention being set forth in the claims appended hereto. It should be also understood that there is no intention to limit the invention to the specific forms disclosed, but on the contrary, the intention is to cover all modifications, alternative constructions, and equivalents falling within the spirit and scope of the invention.

## Claims

1. An apparatus for comparing, sorting and presenting an objects comprising a storage module (1) for storing plurality of the objects (6);
a data processing module (2);
a manipulator module (3);
a conveyance and presentation means (4);
a collection module (5), wherein the storage module (1) is connected to the manipulator module (3), said manipulator module (3) is connected to the conveyance and presentation means (4), the data processing module (2) is connected to the storage module (1), the manipulator module (2) and the conveyance and presentation means (4), said data processing module (2) comprising a computing device (200), a pointing device (261), a keyboard device (262), and a monitor (281), said computing device (200) comprising a processing unit (210), a system memory (220), an output peripheral interface (230), a non-removable non-volatile memory interface (240), a removable non-volatile memory interface (250), a user input interface (260), a network interface (270), a video interface (280) and a system bus (300) substantially coupling said processing unit (210), system memory (220), output peripheral interface (230), non-removable non-volatile memory interface (240), removable non-volatile memory interface (250), user input interface (260), network interface (270), and video interface (280), said non-removable non-volatile memory interface (240) comprising an operating system (242), a comparing program (243) and a program data (244), said program data (244) comprising a plurality of characteristics (not shown) of said objects (6), wherein further the objects (6) are arrangeable on the conveyance and presentation means (4) in a compartments (7), said compartments (7) arrangeable in an order according the user input (502) into the comparing program (243) communicable with the program data (244).

2. The apparatus according to claim 1, wherein the compartments (7) are movable.

3. The apparatus according to claim 1, wherein the storage module (1) comprises plurality of a storage compartments (not shown).

4. The apparatus according to claim 1, wherein the manipulator module (3) comprises plurality of a manipulating means (not shown).

5. The apparatus according to claim 1, wherein the conveyance and presentation means (4) comprise plurality of a conveyance and presentation parts (44).

6. The apparatus according to claim 1, wherein the data processing module (2) is accessible by the network interface (270) from a remote computer (295).

7. The apparatus according to claim 1, wherein the compartments (7) are arrangeable in a form of ostensible matrix (30) comprising at least a first columns (40) and a first rows (50), said first columns (40) and first rows (50) further comprising respectively a second columns (60) and a second rows (70).

8. The apparatus of claim 1, wherein the objects (6) have the same at least first characteristic and are distinguishable by at least a second characteristic.

9. The apparatus of claim 1, wherein the objects (6) have the same at least first characteristic and the same at least second characteristic, and said objects are distinguishable by at least third characteristic.

10. The apparatus of claim 1, wherein the objects (6) have the same at least first characteristic, the same at least second characteristic, the same at least third characteristic, and said objects are distinguishable by at least a fourth characteristic.

11. The apparatus according to claim 1, wherein the compartments (7) are in a form of loop movable horizontally.

12. The apparatus according to claim 1, wherein the compartments (7) are in a form of loop movable vertically.

13. The apparatus according to claim 1, wherein the objects (6) placed in the compartments (7) are initially visible to the user.

14. The apparatus according to claim 1, wherein some of the objects (6) placed in the compartments (7) are initially not visible to the user.

15. The apparatus according to claim 1, wherein the characteristics of the objects (6) consists of any kind of data or variable.

16. A method for comparing, sorting and presenting an objects, the method comprising the steps of
entering a user input with at least one data search parameter to a data processing module,
accessing by the data processing module a program data comprising plurality of characteristics of the objects,
processing a command by the data processing module to search and compare the objects,
receiving from the data processing module a content search results data comprising plurality of the characteristics of the objects matching at least one of the search parameters,
grouping the objects according to the respective values of at least one of the characteristics of the objects,
sorting the objects according to the values of at least one of the characteristic of the objects,
presenting multidimensionally to the user the objects in a compartments.

17. The method of claim 16 comprising plurality of iterations and plurality of said steps.

18. The method of claim 16 wherein the compartments with the objects being the result of at least two data search results are simultaneously presented to the user.

19. The method according to claim 16, wherein the compartments are movable.

20. The method according to claim 16, wherein the compartments are arranged in a form of an ostensible matrix comprising at least a first columns and a first rows, wherein the objects respectively match at least one of the characteristics according the user input.

21. The method according to claim 16, wherein the first rows are sorted according to the values of at least the second characteristic of the objects.

22. The method according to claim 16, wherein the first columns are sorted according to the values of at least the second characteristic of the objects.

23. The method according to claim 16, wherein in the step of sorting the objects according to the values of the second characteristic of the objects, said objects are iteratively sorted and grouped according to the same values of the second characteristic and according to the values of the subsequent characteristics of the objects until no objects are grouped after last sorting.

24. The method according to claim 16, wherein in the step of sorting the objects according to the values of the second characteristic of the objects, said objects are iteratively sorted and grouped according to the same values of the second characteristic and according to the values of the subsequent characteristics of the objects until no objects are grouped after last sorting,
wherein further in the step of presenting the objects to the user in the compartments, said objects having the same at least first characteristic and the same at least second characteristic, said objects are distinguishable by at least third characteristic, according the user input.

25. The method according to claim 16, wherein in the step of sorting the objects according to the values of the second characteristic of the objects, said objects are sorted iteratively and grouped according to the same values of the second characteristic and according to the values of the subsequent characteristics of the objects until no objects are grouped after last sorting,
wherein further in the step of presenting the objects to the user in a compartments the objects having the same at least first characteristic, the same at least second characteristic, the same at least third characteristic are distinguishable by at least fourth characteristic, according the user input.

26. Method of claim 16, wherein the objects presented to the user in the compartments are being changed in response an interactive part of the presented objects being selected.

27. A computer program product stored on a computer usable medium comprising computer readable program code which, when executed, causes a computer to perform all of the steps of the method of claims 16 ― 29.
